# DEMANDE DE BREVET EUROPEEN

(11) **EP 1 323 351 A2**
(43) Date de publication de la demande: **02.07.2003**
(21) Numéro de dépôt: 03007116.1
(22) Date de dépôt: 04.03.1997
(51) Int. Cl.: A23B 7/154, A23B 7/06, A23B 7/005

(54) **Dispositif de traitement de fruits et legumes**

(30) Priorité: 12.03.1996 FR 9603100
(62) Demande divisionnaire de: 97400498.8
(71) Demandeur: XEDA INTERNATIONAL, 13670 Saint-Andiol (FR)
(72) Inventeur: Bompeix, Gilbert, 75015 Paris (FR); Sardo, Alberto, 78150 Le Chesnay (FR)
(74) Mandataire: Bernasconi, Jean Raymond

(57) **Abrégé**

Cette invention concerne un dispositif de traitement de fruits et légumes après récolte, comprenant :
- des moyens pour appliquer une composition traitante par douchage ou immersion, ladite composition traitante étant une composition préalablement portée à une température de 40° à 60°C, et
- des moyens pour refroidir lesdits fruits et légumes jusqu'à une - température inférieure ou égale à la température ambiante.

## Description

La présente invention concerne un procédé de traitement des fruits et légumes frais.

Après leur récolte, les fruits et légumes frais sont couramment stockés, pendant une période qui peut être relativement longue, avant d'être mis sur le marché pour une consommation rapide.

Au cours de cette période de stockage, il importe que les fruits et légumes ne perdent pas leurs qualités, notamment d'aspect. Celles-ci peuvent être dégradées, en particulier par la prolifération de champignons à la surface du fruit ou du légume, qui conduit à la détérioration rapide du fruit ou du légume touché, ou par le phénomène d'échaudure (ou "scald") qui se traduit par un noircissement de la peau des fruits ou légumes dû à des produits oxydés, s'accumulant dans la couche cireuse de surface, phénomène qui peut gagner la pulpe des fruits. Ces détériorations sont encore plus rapides si le fruit ou le légume présente des micro-blessures constituées par des entailles dans la peau.

De nombreux produits existent et sont disponibles pour traiter les fruits et légumes contre cette détérioration au cours du stockage. Toutefois, ils ont souvent l'inconvénient de présenter des risques de toxicité pour le consommateur. Les nouveaux produits synthétiques disponibles sur le marché et destinés à pallier cet inconvénient ont cependant le désavantage d'un prix élevé, lié au coût de leur développement.

Il serait souhaitable de pouvoir s'orienter vers des molécules déjà connues d'accès facile, et présentant une phytotoxicité faible ou nulle, mais la plupart des molécules testées se sont avérées inefficaces ou pratiquement inertes pour le contrôle de physiopathie oxydative des fruits et légumes ou du développement fongique sur ces derniers.

La présente invention a précisément pour but de fournir un procédé de traitement des fruits et légumes après récolte, mettant en oeuvre des molécules largement disponibles, notamment de produits d'origine naturelle, ne présentant pas de risques de toxicité pour le consommateur.

C'est en cherchant à atteindre ce but qu'il a été découvert dans la présente invention que des composés terpéniques et des agents antioxydants, qui sont des molécules considérées jusqu'à présent comme inefficaces dans le traitement des fruits et légumes par contact avec une composition liquide, se révèlent hautement efficaces lorsqu'elles sont utilisées dans un véhicule aqueux à une température supérieure à la température ambiante et inférieure à la température de dégradation par la chaleur des fruits et légumes.

Au sens de la présente description, le terme "inefficace" désigne des produits totalement inactifs en solution ou dispersion aqueuse à température ambiante, dans un traitement des fruits et légumes, notamment un traitement anti-fongique ou anti-échaudure, ou bien des produits très faiblement actifs en solution ou dispersion à température ambiante aux doses habituelles de traitement mais ne procurant pas une protection satisfaisante des fruits et légumes, ou bien ne procurant des résultats corrects que pour des doses d'utilisation très largement supérieures aux doses habituelles, ces doses excessives pouvant être toxiques.

Il est déjà connu que l'immersion d'un fruit, notamment de pêches ou de pommes, dans de l'eau chaude à une température d'environ 45 à 60°C permettait d'en réduire la dégradation causée par le développement de champignons. Il est également connu de coupler un traitement par l'eau chaude avec une faible dose de produits fongicides utilisés habituellement dans des compositions aqueuses, afin d'augmenter l'efficacité de ces derniers pour le contrôle des champignons.

Mais la littérature ne décrit pas l'effet de potentialisation exercé par l'eau chaude sur des substances reconnues comme inefficaces dans les traitements de fruits et légumes.

L'invention a ainsi pour objet un procédé de traitement de fruits ou de légumes après récolte, caractérisé en ce qu'il comprend les étapes consistant à:
- porter à une température de 40 à 60°C une composition traitante liquide, dans un véhicule aqueux, comprenant au moins un agent traitant choisi parmi un agent antioxydant de type polyphénol, un composé terpénique et leurs mélanges, et
- mettre les fruits ou légumes au contact de la composition traitante liquide à ladite température pendant une durée inférieure ou égale à 10 minutes.

Le procédé de l'invention s'applique de façon très avantageuse à des traitements anti-oxydants où l'agent antioxydant est un polyphénol.

Les polyphénols manifestent grâce au procédé de l'invention un effet anti-oxydant suffisant pour être efficace dans un traitement anti-échaudure. On notera que les composés antioxydants ont également un effet très positif sur la résistance des fruits et légumes aux infections fongiques.

Par polyphénol on entend, selon l'invention, des composés comportant un ou plusieurs noyaux phényle substitués par au moins deux groupes hydroxyle.

Des exemples de tels polyphénols sont la quercétine et le rosmaridiphénol de formules respectives:

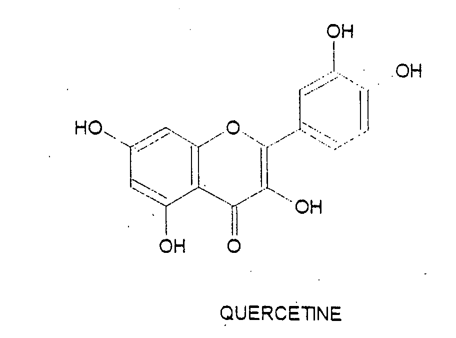

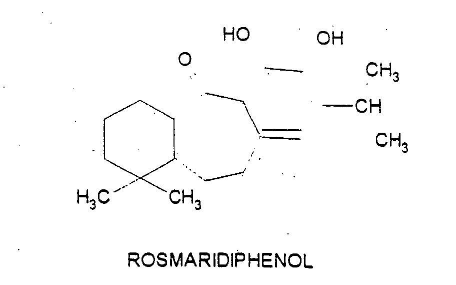

Les polyphénols préférés utilisés selon l'invention sont d'origine naturelle. De façon avantageuse les polyphénols sont extraits de végétaux ou de fruits. Ils peuvent être utilisés après extraction sous la forme de mélanges complexes de plusieurs polyphénols. Ces mélanges contiennent de préférence au moins 70 %, mieux encore au moins 80 % et plus préférablement au moins 90 % de polyphénols. Toutefois, des mélanges moins concentrés peuvent également être utilisés. De tels extraits naturels, plus ou moins concentrés en polyphénols, sont facilement accessibles.

L'homme du métier peut notamment les obtenir par mise en oeuvre de méthodes connues d'extraction et purification.

Les composés terpéniques peuvent être utilisés dans la présente invention pour fournir un traitement fongicide des fruits et légumes. Des traitements fongicides, à base de terpène, sont déjà connus, mais mettent en oeuvre les composés terpéniques en phase vapeur par volatilisation dudit composé dans l'enceinte de traitement. Des traitements de fruits et légumes par des compositions liquides contenant des terpènes se sont avérés inefficaces jusqu'à présent, car ils nécessitaient une dose importante de compositions traitante et un renouvellement fréquent des applications.

Les terpènes, utilisables selon la présente invention, sont de préférence des monoterpènes, tels que le pinène ou le limonène. Les monoterpènes oxygénés sont préférables aux monoterpènes simplement hydrocarbonés. On peut citer comme exemple le terpinéol, l'eucalyptol, le menthol, la menthone, la carvone, le cinéol, le citronellal. On préfère les composés de la classe des terpènes d'origine naturelle, bien que ces composés puissent également être accessibles par voie synthétique.

La composition traitante se présente avantageusement sous forme de solution ou de dispersion dans ledit véhicule aqueux.

Selon que le produit est plus ou moins soluble dans l'eau, la composition peut également comprendre en outre au moins un tensioactif choisi de façon connue en soi parmi les tensioactifs non-ioniques, anioniques, cationiques et amphotères.

La teneur en ledit produit dans la composition traitante est avantageusement de 100 à 10 000 ppm. En particulier, on préfère des compositions comprenant de 200 à 5 000 ppm de composés terpéniques, ainsi que des compositions comprenant de 500 à 10 000 ppm de polyphénols.

Avant application sur les fruits ou légumes, la composition liquide est chauffée à une température de 40 à 60°C, de préférence de 45 à 55° C, mieux encore de 48 à 52° C, par exemple 50° C .

Selon un mode de réalisation préféré, la mise en contact avec les fruits ou légumes a lieu de façon à chauffer en surface les fruits et légumes à une température d'au moins 35° C, mieux encore d'au moins 40° C, par exemple 45-50° C. Ainsi, l'application de la composition sur les fruits ou légumes est-elle avantageusement réalisée par immersion ou douchage. Une simple pulvérisation ou nébulisation de la composition traitante est souvent insuffisante pour chauffer les fruits ou légumes en surface à la température souhaitée, rendant inefficace le procédé de l'invention.

Les techniques mises en oeuvre dans l'invention réalisent une application massive de la composition liquide. Dans le cas d'un douchage ou de techniques analogues, il est préférable d'appliquer la composition sous forme d'un jet continu de liquide. L'aspersion sur les fruits ou légumes de grosses gouttes dont la taille n'est pas inférieure à environ 100 µm n'est cependant pas exclue.

La durée de cette opération est très courte, généralement inférieure ou égale à 10 minutes, notamment de 30 secondes à 10 minutes, avantageusement de 30 secondes à 5 minutes. Un temps de contact de 2 à 3 minutes est le plus souvent suffisant.

Il va sans dire que l'homme du métier ajustera le temps de mise en contact des fruits et légumes avec la composition traitante et la température de la composition traitante de façon à ne pas abimer les fruits ou légumes et éviter un début de cuisson.

L'application de la compositions se fait de préférence de telle sorte que la quantité d'agent traitant appliquée corresponde aux doses habituelles d'utilisation d'agent traitant dans les traitements en question. Cette quantité peut être avantageusement de 0,4 à 40 g dudit agent par tonne de fruits ou de légumes traités.

De préférence, la quantité d'agent antioxydant utilisée sera de 2 à 40 g/tonne et la quantité de composé terpénique sera de 0,4 à 20 g/tonne de fruits ou légumes traités.

Lorsque la durée de traitement par la composition chaude désirée est atteinte, il peut être mis fin à l'application par tous moyens connus, notamment par simple arrêt de l'aspersion ou retrait des fruits ou légumes du bac d'immersion. Les fruits ou légumes sont alors aptes à être stockés en vue de leur distribution ultérieure.

Dans une variante avantageuse, en particulier dans le cas des fruits ou légumes sensibles à la chaleur, le procédé peut comprendre en outre une étape consistant à refroidir rapidement les fruits ou légumes qui ont été mis au contact de la composition traitante chaude, et ce jusqu'à une température inférieure ou égale à la température ambiante.

Ce refroidissement peut être réalisé par circulation d'air ou par contact avec de l'eau (notamment immersion ou aspersion) dont la température inférieure ou égale à la température ambiante.

De manière surprenante, le procédé de l'invention permet, avec une seule application de composition traitante à la dose de matière active habituelle et un temps de traitement extrêmement réduit, de protéger durablement les fruits et légumes contre l'oxydation ou les infections fongiques.

Ce procédé est d'autant plus avantageux lorsque les agents traitants sont des substances naturelles, dont l'ingestion est sans danger pour le consommateur.

Les exemples ci-après illustrent l'invention.

### I - Traitement anti-échaudure sur des pommes MELROSE

### EXEMPLES 1 à 3

Des pommes Melrose sont traitées après récolte avec une composition comprenant des polyphénols concentrés extraits d'épinards (par la suite, notés NAO) en solution aqueuse à une concentration de 0,4 % en poids (4 000 ppm), à raison de 20 g de NAO par tonne de pommes. Le traitement a consisté en une immersion pendant deux minutes à une température indiquée dans le tableau 1 ci-après.

Les fruits retirés de la composition après les deux minutes d'immersion ont été stockés à l'air libre à la température de 5°C pendant une période de 9 mois à l'issue de laquelle on a évalué le taux d'échaudure et l'aspect du fruit.

Le taux d'échaudure est exprimé par le nombre de fruits présentant des taches noires typiques de cette physiopatie, par rapport au nombre de fruits traités.

L'aspect des fruits a été noté sur une échelle à trois niveaux :
+++ : fruit indemne
++ : fruit présentant de petites taches ponctuelles (de nature différente des taches noires de "scald")
+ : fruit présentant quelques taches de petite dimension ne dépassant pas 1/4 du fruit
o : fruit présentant de nombreuses taches dépassant la moitié du fruit - aspect inacceptable du point de vue commercial.

Les résultats de ces évaluations sont consignés dans le tableau 1 ci-après où figurent également les résultats des exemples 4 et 5 et des exemples comparatifs 1 à 3 explicités ci-dessous.

### EXEMPLES 4 et 5

Le traitement de l'exemple 1 a été reproduit avec une composition contenant en outre 4 000 ppm de nonylphénol éthoxylé à 30 unités d'oxyde d'éthylène (NP-30 OE).

### EXEMPLES COMPARATIFS 1 et 2

Les compositions traitantes des exemples 1 et 4 sont utilisées pour traiter la même quantité de pommes par immersion à la température ambiante pendant une durée de 20 minutes.

### EXEMPLE COMPARATIF 3

La même quantité de pommes est traitée par une composition comprenant de la diphénylamine en solution aqueuse à une concentration de 500 ppm, par immersion à température ambiante pendant une durée de 2 minutes.

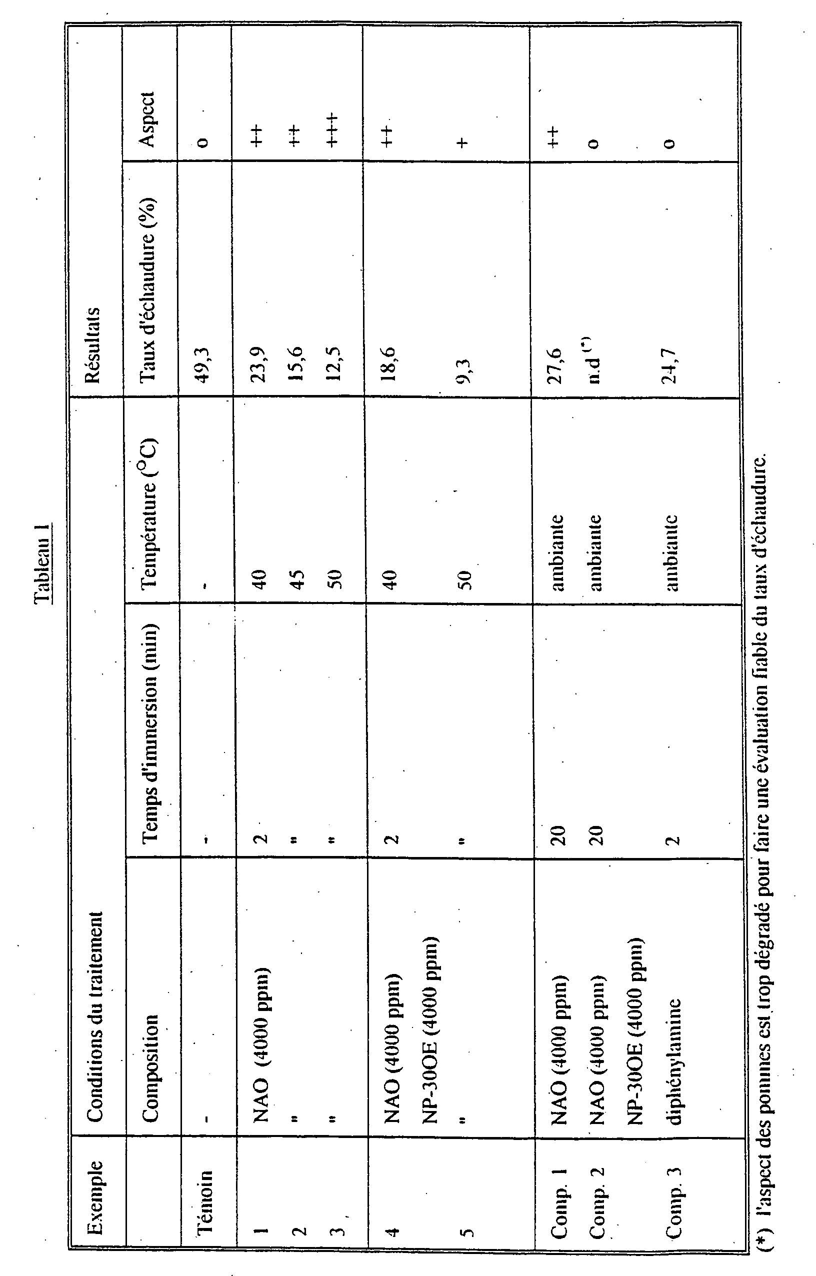

### II - Traitement antifongique de pommes Golden

### EXEMPLE 6

On prépare une émulsion hydrodispersible de 1-carvone ayant la composition pondérale suivante :
1-carvone : 30 %
Nonylphénol éthoxylé à 10 unités d'oxyde d'éthylène : 70%

Cette émulsion est diluée dans de l'eau à raison de 1,33 kg/hl pour fournir une composition traitante, titrant 4000 ppm de 1-carvone.

Un lot de pommes golden est traité par immersion dans cette composition pendant un temps de 2 minutes, à la température de 50°C, à raison de 10 g de l-carvone par tonne de pommes.

Après avoir été retirées du bain d'immersion, les pommes sont inoculées avec des pourritures de Botrytis cinerea, puis stockées à la température ambiante de 5°C.

On mesure après différentes durées de stockage le taux d'inoculation réussi, c'est-à-dire le nombre de souches qui se sont développées par rapport au nombre total de souches inoculées.

### EXEMPLE COMPARATIF 4

L'exemple 6 est reproduit à ceci près que l'immersion a lieu dans la composition à la température ambiante.

Les résultats de ces exemples sont consignés dans le tableau 2 ci-après.

**Tableau 2**

| EXEMPLE | Température d'immersion (°C) | Taux d'inoculation réussi (%) après | | |
|---|---|---|---|---|
| | | 14 jours | 23 jours | 30 jours |
| 6 | 50 | 0 | 4 | 4 |
| Comparatif 4 | ambiante | 48 | 60 | 84 |

Cet exemple prouve que le traitement selon l'invention à la température de 50°C et pendant 2 minutes seulement permet d'enregistrer une très bonne efficacité de la 1-carvone qui est quasiment inefficace en composition aqueuse à la température ambiante. En effet, seules 4 % des pourritures se sont développées après un mois de stockage à 5°C au lieu des 84 % présentes sur les fruits témoins traités à la température ambiante.

## Revendications

1. Dispositif de traitement de fruits et légumes après récolte comprenant :
- des moyens pour appliquer une composition traitante auxdits fruits et légumes ; et
- des moyens pour refroidir lesdits fruits et légumes.

2. Dispositif selon la revendication 1, dans lequel les moyens pour appliquer la composition traitante sont tels que les fruits sont chauffés en surface à une température de 35° à 50°C.

3. Dispositif de traitement selon les revendications 1 et 2, dans lequel les moyens pour appliquer la composition traitante sont des moyens de douchage ou d'immersion.

4. Dispositif de traitement selon l'une quelconque des revendications précédentes, dans lequel les moyens pour appliquer la composition traitante permettent la mise en contact pendant une période inférieure ou égale à 10 minutes.

5. Dispositif selon l'une quelconque des revendications précédentes, dans lequel les moyens de refroidissement sont des moyens de circulation d'air ou de contact avec de l'eau.

6. Dispositif selon la revendication 5, dans lequel les moyens de refroidissement par contact avec de l'eau sont des moyens d'immersion ou d'aspersion.

7. Dispositif selon l'une quelconque des revendications précédentes, dans lequel les moyens de refroidissement sont tels que les fruits et légumes sont refroidis à une température inférieure ou égale à la température ambiante.

8. Dispositif selon l'une quelconque des revendications précédentes, pour lequel la composition traitante est préalablement chauffée à une température de 40° à 60°C.

9. Dispositif selon l'une quelconque des revendications précédentes, comprenant des moyens de chauffage de la composition traitante, préalablement à l'application de ladite composition traitante auxdits fruits et légumes.
